# EUROPEAN PATENT APPLICATION

(11) **EP 3 936 407 A1**
(43) Date of publication of application: **12.01.2022**
(21) Application number: 20185240.7
(22) Date of filing: 10.07.2020
(51) Int. Cl.: B61J 1/08

(54) **PROCESSING APPARATUS, SYSTEM AND METHOD FOR CONVEYING THERETHROUGH PARTS TO BE TREATED AND DEVICE FOR INTERCONNECTING A FIRST LINE AND A SECOND LINE OF THE SYSTEM**

(71) Applicant: Atotech Deutschland GmbH, 10553 Berlin (DE)
(72) Inventor: Unterluggauer, Josef, 10553 Berlin (DE); Ritter, Matthias, 10553 Berlin (DE); Lorenz, Olaf, 10553 Berlin (DE); Huang, Zhenhan, 10553 Berlin (DE)
(74) Representative: Atotech Deutschland GmbH

(57) **Abstract**

A device for interconnecting a first line (1a) and a second line (1b) of a system for conveying parts to be treated through a processing apparatus by means of at least one product carrier (7) comprising a transporter (19) comprising at least one runner (36,37) supported on at least one track (10a,b) comprises a main support structure (47). The device further comprises a movable support structure (48), at least indirectly supported by and movable relative to the main support structure (47) between at least a first position and a second position. The movable support structure (48) comprises at least one track segment (50a,b) for supporting at least one runner (36,37) of a transporter (19) in a support direction (z). Each track segment (50a,b) is alignable with a respective track (10a,b) of the first line (1a) in the first position and with a respective track (10a,b) of the second line (lb) in the second position such that an end of the track segment (50a,b) adjoins an end of the aligned track (10a,b) to allow a runner (36,37) to cross over between the aligned track (10a,b) and track segment (50a,b). The movement between the first position and the second position comprises a rotation about an axis (54) parallel to the support direction (z) and a translation with at least a component in axial direction.

## Description

### Technical Field

The invention relates to a device for interconnecting a first line and a second line of a system for conveying parts to be treated through a processing apparatus by means of at least one product carrier comprising a transporter comprising at least one runner supported on at least one track, the device comprising:
a main support structure; and
a movable support structure, at least indirectly supported by and movable relative to the main support structure between at least a first position and a second position,
wherein the movable support structure comprises at least one track segment for supporting at least one runner of a transporter in a support direction, and
wherein each track segment is alignable with a respective track of the first line in the first position and with a respective track of the second line in the second position such that an end of the track segment adjoins an end of the aligned track to allow a runner to cross over between the aligned track and track segment.

The invention also relates to a system for conveying parts to be treated through at least one processing apparatus.

The invention also relates to an apparatus for wet-chemical processing of parts to be treated.

The invention also relates to a method of conveying parts to be treated through at least one processing apparatus by means of at least one product carrier comprising a transporter, the transporter comprising at least one runner supportable on a track, which method comprises:
moving the product carrier along a first line comprising at least one track supporting at least one of the runners of the product carrier's transporter for movement along the track; and
moving the product carrier along a second line comprising at least one track supporting at least one of the runners of the product carrier's transporter for movement along the track,
wherein the product carrier is moved from the first line to the second line by means of a station interconnecting the first line and the second line, which station comprises:
   a main support structure; and
   a movable support structure, at least indirectly supported by and movable relative to the main support structure between at least a first position and a second position,
wherein the movable support structure comprises at least one track segment for supporting at least one runner of a transporter in a support direction,
wherein moving the product carrier from the first line to the second line by means of the station comprises:
   aligning each track segment with a respective track of the first line in the first position such that an end of the track segment adjoins an end of the aligned track;
   causing the product carrier to move from the first line onto the movable support structure, wherein the runners of the transporter cross over from the track(s) of the first line to the track segment(s);
   aligning each track segment with a respective track of the second line in the second position such that an end of the track segment adjoins an end of the aligned track; and
   causing the product carrier to move from the movable support structure onto the second line, wherein the runners of the transporter cross over from the track segment(s) to the track(s) of the second line.

### Background Art

JP H10-297757 A discloses a device provided with a forward rail and a return rail disposed in parallel to carry a workpiece from a first assembly line to an assembly station on a second assembly line, a first traverser to connect a downstream end of the return rail to an upstream end of the forward rail, and a second traverser to connect a downstream end of the forward rail to an upstream end of the return rail and the assembly station. As a self-propelled mobile carriage on which a workpiece is mounted runs on the forward rail to get on the second traverser, the second traverser moves the mobile carriage to the assembly station, where the work is discharged. The mobile carriage empty of load is transferred by the second traverser to the return rail, where it runs to get on the first traverser to be returned onto the first assembly line. A problem of this arrangement is that the forward rail and return rail and the drives for the traversers have to be tailor-made for the assembly plant. Moreover, workers in the plant cannot move between the first and second lines because the traversers carrying the mobile carrier are in the way and represent a danger. Amongst others, the workpiece suspended from the mobile carrier is likely to be at the level of the workers.

US 2019/0308820 A1 discloses a conveyor system that includes a conveyor rail and a plurality of automated carriers. The conveyor rail is a single passive, non-electrified, rail defining a track for the plurality of automated carriers. Each of the plurality of automated carriers includes a self-contained power supply and a self-contained drive mechanism for autonomously driving itself along the track defined by the conveyor rail. The conveyor system can be an overhead conveyor or an inverted conveyor. In some embodiments, each of the plurality of automated carriers includes a microprocessor operable to control the drive mechanism to set drive parameters including travel distance, speed, and acceleration/deceleration according to pre-programmed instructions stored within a memory of the microprocessor. In some embodiments, one or more of the plurality of automated carriers is remotely re-programmed from a wireless remote controller during operation. In addition to the navigation of curved sections within the conveyor system, certain embodiments may include transitions that include more abrupt directional changes, such as a side shift or vertical shift at a defined switch point. Such a shift can in some embodiments include a rotary turntable rail portion having movable conveyor rail portions thereon. The conveyor system can also include an elevator rail portion that supports at least one automated conveyor carrier for vertical movement along a track to allow vertical movement directly away from an upstream portion of the rail, which may be a horizontal rail portion. It is not disclosed that the elevator rail portion and turntable rail portion immediately follow on each other.

US 4,762,218 discloses a production plant comprising several modularly assembled individual stations, the complete production plant comprising two different kinds of individual stations, namely conveying modules and deflector modules. A manual working module corresponding substantially in its form to a conveying module is provided, the module incorporating two table plate modules positioned one right behind the other in longitudinal direction and identical to table plate modules of the conveying modules. Guiding track modules are situated on the upper sides of the table plate modules of the conveying modules and of the table plate modules of the deflector modules. The guiding track modules of the front and rear rows of consecutively positioned conveying modules and guiding track modules of the deflector modules form two continuous conveyor tracks extending parallel to each other. Guiding track modules forming two transverse conveyor tracks extend transversely of the longitudinal conveyor tracks at opposite ends of the production plant. The connection between the longitudinal and the transverse conveyor tracks is established at the deflector modules by means of rotary plate or turntable modules. Workpiece carriers are guided vertically and laterally on guiding bars of the guiding track modules. As with the system of JP H10-297757 A, there is a problem in that workers cannot access the space between the two lines of conveying modules that comprise the longitudinal conveyor tracks, because those lines that comprise the transverse conveyor tracks are in the way.

It is observed that US 2009/0288931 A1 discloses a vertical carrying apparatus which is connected to a plurality of carrying paths provided on a plurality of floors so as to carry an object to be carried in a vertical direction. The vertical carrying apparatus includes an elevation conveyor, a cableveyor (elevator unit) and a vertical carrying controller with an elevation controller and a turntable controller. A system controller is a controller for controlling a whole carrying system and outputs a carrying operation instruction of an FOUP (Front Opening Unified Pod or Front Opening Universal Pod), which corresponds to an object to be carried. Ports are installed for respective floors of an elevator space. A roller conveyor constituting the elevator conveyor is supported on a turntable and includes a roller support frame, a roller and a roller shaft. The roller is disposed on both sides of the frame and includes a driving roller with a driving mechanism, which is disposed on one side, and a driven roller without the driving mechanism, which is disposed on the other side so as to be rotatable. The driving roller includes one block of five rollers. It is disclosed that the carrying apparatus may be applied to a carrier system using other carrying conveyors, such as a belt conveyor and a chain conveyor or a carrying system using a carrying type such as an OHT (Overhead Hoist Transport) or OHS (Overhead Hoist Shuttle). Here, when the vertical carrying apparatus according to the preferred embodiment is applied to the carrying system using the overhead type such as the OHT or the OHS, the carrying operation may be carried out from the carrying path of the OHT or OHS to the ports of the apparatus through OHT or OHS ports installed adjacent thereto. In addition, in the case of the OHS, when a load receiver is configured as a conveyor, an object to be carried can be sent and received by the carrying operation between the OHT port and the conveyor. In other words, the FOUP, the workpiece carrier, is transferred from the shuttle to the conveyor through adjacent ports. Transferring workpieces or workpiece carriers between a transporter and another transporter or a conveyor makes the conveying system relatively complicated and may lead to delays in the overall processing of the workpieces. Systems using only conveyors and no transporters moving on tracks are unsuitable for many types of processing apparatus, in particular those in which the workpieces are to be immersed in baths of liquid. Furthermore, once a workpiece carrier has been transferred from a transporter or shuttle, that transporter has to reverse course to pick up a new workpiece carrier. This requires the line along which the transporter or shuttle has arrived to be free or the provision of a separate return line. Conveying systems in which a transporter moves with the workpieces from beginning to end are therefore more suited to processing apparatus for carrying out a series of treatments on the workpieces.

### Summary of Invention

It is an object of the invention to provide a device, system, apparatus and method of the types defined above in the opening paragraphs that can be used to lay out a conveying system, and thus the processing apparatus, flexibly, such that the conveying system can be operated relatively efficiently and a degree of safety for workers moving between processing lines of the processing apparatus is provided.

This object is achieved according to a first aspect by the device according to the invention, which is characterised in that the movement between the first position and the second position comprises a rotation about an axis parallel to the support direction and a translation with at least a component in axial direction.

The support direction is generally the direction counter to the direction in which the transporter, through the runner or runners, bears down on the track segment or track segments. This direction is discernible from the structure of the track segment or track segments. In principle, the support direction is oriented generally vertically when the device is in an operative position of the device. In this position, the main support structure is generally stationary, e.g. fixed in position relative to a building housing the processing apparatus or erected on the grounds of a processing plant comprising the processing apparatus. One or both of the first and second lines will generally extend along a processing line of the processing apparatus comprising a number of processing stations. The conveying system moves the parts to be treated from one station to the next. One or both of the first and second lines of the conveying system may just be arranged to interconnect the other with a third line, without extending along a processing line of the processing apparatus.

The conveying system comprises at least one product carrier. Each product carrier comprises one of the transporters. Each transporter comprises one or more runners. The runners are configured to be supported on at least one track, with each of the first and second lines comprising one or more tracks. Multiple runners of the transporter may be supported on any one track simultaneously, in use. Alternatively, there may be one runner per track. At least one of the tracks may also guide the transporter, or a separate track may be provided for this purpose. The runners may comprise one or more shoes arranged for sliding movement on a rail forming one of the tracks. The runners may comprise one or more wheels or rollers, journalled for rotation and placement on one of the tracks. The part of each track supporting one or more runners is, however, stationary, i.e. free of moving parts. Any movable bearing parts are comprised in the runners. The tracks are thus distinguished from conveyors such as are to be found in materials handling systems. The tracks therefore do not need to be provided with means for propelling the product carriers. Indeed, the or each product carrier may comprise a self-propelled transporter.

The movable support structure is at least indirectly supported by and movable relative to the main support structure between at least a first position and a second position. That is to say that the movable support structure is journalled for movement relative to the main support structure, e.g. indirectly supported via the intermediary of a further structure movably journalled to the main support structure. The first and second position need not correspond to limits of a range of movement of the movable support structure.

The movable support structure comprises at least one track segment for supporting at least one runner of a transporter in the support direction. That is to say that the transporter can move onto the track segments with the runners movably supporting the transporter on the track segments. Thus, multiple runners may be supported on any one track segment, in use.
Each track segment is alignable with a respective track of the first line in the first position and with a respective track of the second line in the second position. It follows that the track segments will generally correspond in number to the number of tracks of the first and second line that the device is arranged to interconnect, in use. Alignment is such that an end of the track segment adjoins an end of the aligned track to allow a runner to cross over between the aligned track and track segment. This means that the track segment and track are aligned end-to-end with a relatively small gap. The configurations of the movable support structure and main support structure are such that there are no obstacles preventing the transporter from moving between the first line and the movable support structure in the first position and between the second line and the movable support structure in the second position. Because the runners can move across, the product carrier as whole can move across. There is no need to transfer the parts to be treated to or from the product carrier from or to a conveyor or other product carrier, respectively. This results in minimum delay. In particular where the processing in the processing apparatus is synchronised through processing time intervals of a certain fixed duration, fewer intervals are needed to move the parts to be treated between the first and second line. Furthermore, the parts to be treated can remain with the transporter throughout the process carried out in the processing apparatus. Because the parts to be treated need not be transferred from one product carrier to another or to a conveyor, the product carrier, in particular the transporter comprised therein, need not reverse track. The transporter, and thus the product carrier, can simply move from the first line onto the device. The device then re-orients the transporter, after which the transporter can move onto the second track and continue.

Because the movement between the first position and the second position comprises a rotation about an axis parallel to the support direction, the device enables relatively sharp turns for a limited footprint of the conveying system and processing apparatus. Because the movement between the first position and the second position further comprises a translation with at least a component in axial direction, and because the axis is parallel to the support direction, the first and second lines can be at different levels. If at least one of the first and second lines runs along processing stations of the processing apparatus, the other of the first and second lines can extend transversely to that line at an end point. Workers can cross that other line above or below that other line without being endangered by the transporter or parts of the product carrier depending or extending from the transporter. This enhances safety and enables the layout of the plant comprising the processing apparatus to be improved.

The translation comprises at least a component in axial direction. The translation may comprise a further movement component in a transverse direction. Generally, the translation will be mainly in axial direction, i.e. this component will be the largest component. In embodiments, the translation may deviate by less than 10°, e.g. less than 5°, from the axial direction. Here, movements are with respect to a frame of reference fixed to the main support structure of the device.

In an embodiment, each track segment comprises at least one surface for contacting a wheel of a transporter.

The or each runner therefore comprises one or more wheels, which contact a surface of the track segment to allow the transporter to move along the track segment. Compared to shoes running on rails, small gaps in longitudinal direction between an end of a track segment and an aligned track of the first or second line can be crossed by a wheel of sufficient diameter without jolting the transporter and with relatively little risk of the transporter becoming stuck.

In a particular example of this embodiment, the at least one surfaces comprise a support surface facing in the support direction.

Because the support direction is, in use, at least approximately vertically oriented, the support surface faces upwards. The transporter can comprise a wheeled carriage, with one or more of the wheels being driven wheels for example. It is noted that this embodiment does not rule out that the track segments slope or curve upwards or downwards in longitudinal direction. The track segments may form a slight trough, for example, so that the transporter is relatively easily positioned on the track segments and stays in position during movement of the movable support structure between the first and second positions.

In a particular example of any embodiment of the device in which each track segment comprises at least one surface for contacting a wheel of a transporter, the at least one surfaces for contacting a wheel of a transporter comprise a guide surface facing in a direction at an angle to the support direction and the longitudinal direction.

The transporter cannot therefore depart sideways from a course dictated by the track segment.

In an embodiment, each track segment comprises at least one surface for contacting a runner of a transporter, which surface has an edge at at least one longitudinal end of the track segment that extends at an angle to the longitudinal direction.

This embodiment is for use with first and second lines of which the tracks similarly have an edge at at least one longitudinal end of the track segment that extends at a corresponding angle to the longitudinal direction. The track segments are generally elongated. The longitudinal direction corresponds to the direction of movement of the runner or runners along the track segment. When the track segment is aligned with a respective track of the first line in the first position or with a respective track of the second line in the second position such that an end of the track segment adjoins an end of the aligned track to allow a runner to cross over between the aligned track and track segment, the runner has to cross a gap that is at an angle to the direction of movement of the runner. This further facilitates the crossing of the runner or runners between the tracks and track segment or segments. This is because the runner will generally have a certain extent in a direction transverse to the direction of movement, e.g. a certain width in the case of a wheel. A further effect is obtainable if the surface concerned is a support surface facing in the support direction: the angled ends can form a stop to the rotational component of the movement between the first and second position if that rotation is carried out after the translation.

In an embodiment, the at least one track segments comprise at least two track segments.

The at least two track segments will generally extend at least approximately in parallel in a longitudinal direction. With at least two track segments, the weight of the transporter and the product carrier in which the transporter is comprised can be distributed more evenly. The track segments are less liable to be twisted due to the weight of the product carrier. The product carrier can therefore carry more parts to be treated and, for example, be provided with one or more drives. The runners can still be relatively lightweight.

In a particular example of this embodiment, the track segments are spaced apart in lateral direction, wherein the movable support structure defines a space for receiving at least part of a product carrier, which space is open at a top between the spaced-apart track segments and at opposite ends in longitudinal direction.

In this embodiment, the product carrier can comprise a part depending downwards from the transporter, in use. This part extends into the space. The conveying system can thus be an overhead conveying system, with the parts to be treated suspended at a level below that of the transporter comprised in the product carrier. Such a conveying system is in particular suited for use with an apparatus for wet-chemical treatment of the parts to be treated. The parts to be treated can be lowered into baths containing processing liquid. The tracks of the line of the conveying system extending along a row of processing stations comprising the baths are positioned above the processing stations, making a footprint of the lines relatively compact. To avoid that operatives moving alongside the processing station run the risk of being hit by the depending parts of the product carrier or product carriers, a line interconnecting the line of the conveying system extending along the processing stations with another such line can be positioned at a higher level or at a level below that at which the operatives move. The device interconnecting the lines allows the product carrier to move between the levels. It is noted that this embodiment can be implemented with more than two track segments, one set being on one side of the top opening of the space and the other set being on the other side, such that part of the product carrier can extend between the two sets, when present on the movable support structure.

In an example of this embodiment, the space is bounded laterally by at least one wall.

Here, the lateral boundary is with respect to the longitudinal direction determined by the track segments. The at least one wall protects a depending part of the product carrier when positioned on the track segments. Any liquid adhering to the product carrier is confined between the walls.

In a particular version of this example, the space is bounded at a bottom end by a bottom wall adjoining the at least one walls, the movable support structure further includes wall sections at opposite ends in longitudinal direction, and the wall sections adjoin the bottom wall and the at least one wall bounding the space laterally to define a basin for collecting liquid.

Here, top and bottom are with respect to the support direction, which is, in use, at least approximately vertically oriented. The basin helps avoid contamination of the device and the surroundings of the device by processing liquid adhering to the product carrier.

An embodiment of the device comprises a device for supplying electric power to a transporter, when present on the track segments.

This embodiment allows for the use of self-propelled transporters, but without requiring these to be provided with energy storage devices with a high capacity. This makes the transporters lighter. Self-propelled transporters reduce the complexity of the stationary parts of the conveying system, i.e. the parts situated along the tracks of the first and second lines. The interconnecting device of this embodiment does not need to be provided with pushers or similar devices for moving the transporter onto and off the movable support structure. The device for supplying electric power may be an inductive power supply or a contact plugged into the transporter by means of e.g. a robotic arm.

In a particular example of this embodiment, however, the device for supplying electric power comprises a live rail mounted to the movable support structure.

The first and second lines may similarly be provided with at least one live rail. The product carrier will be provided with one or more contact shoes for contacting the live rail. In such an embodiment, each live rail of the interconnecting device may be alignable with a respective live rail of the first line in the first position and with a respective live rail of the second line in the second position such that an end of the live rail of the interconnecting device adjoins an end of the aligned lie rail to allow a contact shoe of the product carrier to cross over between the aligned live rails. Alternatively, the product carrier may comprise a device for storing electrical energy, e.g. a capacitor or battery, arranged to supply power when the product carrier moves between live rails.

An embodiment of the device further comprises at least one support, guided for movement in the axial direction relative to the main support structure, wherein the movable support structure is rotatably mounted to the at least one support for rotation about the axis.

There may be one support functioning as a kind of platform on which the movable support structure is mounted in the manner of a turntable. There may alternatively be a plurality of supports that are not interconnected independently of the movable support structure, but collectively carry the movable support structure. In this embodiment, only a relatively lightweight movable support structure need be rotated compared with a configuration in which a hoist and the movable support structure are rotated.

In an example of this embodiment, the main support structure is provided with at least one hoist for driving movement in the axial direction of at least one of the at least one supports and the movable support structure mounted thereto.

The hoists can be stationary, i.e. fixed in position with respect to the main support structure. The guides need not be provided with drives or other components. They can be relatively lightweight. Each hoist drives movement of at least one of the at least one supports. Collectively, the at least one hoists thereby drive the movement of the axial direction of the movable support structure, which is mounted to the at least one supports.

In a particular version of this example, each hoist comprises a respective lift wheel, the or each lift wheel is mounted to the main support structure, and an upper edge of the main support structure on at least one side other than any side on which at least one of the at least one lift wheels are mounted is at a lower level with respect to the support direction than the lift wheel(s).

The main support structure can thus extend to at least the level of the lift wheel or wheels on at least one, e.g. three, sides. A product carrier can enter or leave the main support structure from the side opposite or adjacent the side on which the hoist wheels are provided. The hoist or hoists can raise the movable support structure to a level positioning the product carrier above the upper limit of the main support structure, at which level the product carrier can move onto or off the movable support structure in a different direction.

In an example of any embodiment further comprising at least one support, guided for movement in the axial direction relative to the main support structure, wherein the movable support structure is rotatably mounted to the at least one support for rotation about the axis, and wherein the main support structure is provided with at least one hoist for driving movement in the axial direction of at least one of the at least one supports and the movable support structure mounted thereto, each hoist includes a lifting medium running around a lift wheel and attached to at least one of the at least one supports at a level below an upper end of the attached support(s) with respect to the support direction.

This allows at least the upper end of the movable support structure to be raised above the main support structure. In particular, the track segments can be positioned at a level sufficient to enable the product carrier to clear the main support structure when moving onto and off the movable support structure. Each hoist comprises a respective lift wheel around which a lifting medium runs. The lifting medium may be a belt, chain, rope or cable, for example.

An embodiment of the device comprises a wheel, mounted to rotate with the movable support structure, and a bearing on which the wheel is supported.

Since the wheel rotates with the movable support structure, an axis of rotation of the wheel is at least approximately aligned with the axis of rotation of the movable support structure. The wheel provides a relatively wide support area compared to a spindle carrying the movable support structure. The bearing may be provided by one or more platforms, e.g. the at least one support mentioned in connection with other embodiments above. Such a platform or platforms is or are guided for translatory movement relative to the main support structure to bring about the translation between the first and second positions.

In an example of this embodiment, the wheel is a toothed wheel arranged to mesh with a pinion coupled to a motor for driving the rotation between the first and second positions.

The movable support structure need thus only comprise the wheel, but not the motor. Drive belts or chains, which need to be kept at an appropriate tension, are not required to effect the rotation between the first and second position in this embodiment.

According to another aspect, the system according to the invention for conveying parts to be treated through at least one processing apparatus comprises at least one device according to the invention, the first line, the second line and at least one product carrier, each product carrier comprising a transporter comprising at least one runner for supporting the transporter for movement along the tracks of the first line, the tracks of the second line and the track segments of the device.

The system allows the first and second lines to be located at different heights and to extend at large angles, e.g. at right angles, to each other. This makes the system relatively compact. One of the first and second lines can, in use, extend along a row of processing stations of the processing apparatus. The other can be positioned at the end of the row where the row runs up against a boundary of an area available for the processing apparatus. Alternatively, the interconnecting device can be used to shunt a product carrier out of a production line, e.g. to implement a fork in a production line of the processing apparatus. Operatives can easily and safely access a space alongside the row of processing stations. The line of the conveying system that extends at right angles thereto does not hinder their passage, because the interconnecting device moves the product carriers to a different level.

In an embodiment of the system, at least one of the first line and the second line comprises a series of segments, each segment comprising a respective segment of each of the at least one tracks and a support structure on which the segments of the at least one tracks are mounted.

This embodiment allows for the conveying system to be implemented in a modular manner. In a particular embodiment, each segment allows for pre-assembly at a manufacturing facility prior to shipment to the site of the processing apparatus. The system segments may in particular be dimensioned to fit into a standard-size shipping container (intermodal container), e.g. in accordance with international standard ISO 668. That is to say that the length would be such as to allow the system segment to fit into a 40 foot (12.192 m) container. Height (without product carrier) and width would also be appropriately dimensioned, e.g. to fit an 8 foot-wide (2.438 m) container with a height of, for example, 9 foot, six inches (2.896 m).

In an embodiment of the system, the at least one tracks of the first line are positioned at a different level in the support direction than the at least one tracks of the second line.

An embodiment of the system further comprises at least a third line comprising at least one track for supporting the at least one runner of the transporter for movement, and a second device according to the invention, arranged to interconnect the second line and the third line, wherein the at least one tracks of the third line correspond in number to the track segments of the second device and the tracks of the second line, and wherein each track segment of the second device is alignable with a respective track of the second line in the first position and with a respective track of the third line in the second position such that an end of the track segment adjoins an end of the aligned track to allow a runner to cross over between the aligned track and track segment.

The first and third lines can, for example, extend along respective rows of processing stations of the processing apparatus. The second line interconnects them. Operatives can enter the space between the first and third lines. Product carriers can move along the first and third lines in parallel (i.e. in the same direction), or the second line can be arranged to enable the three lines to form a loop, so that the parts to be treated can pass through relatively many processing stations without the processing apparatus becoming very long.

In an example of this embodiment, at least the tracks of the first and third lines extend essentially in parallel.

In a further example of any embodiment of the system that further comprises at least a third line comprising at least one track for supporting the at least one runner of the transporter for movement, and a second device according to the invention, arranged to interconnect the second line and the third line, wherein the at least one tracks of the third line correspond in number to the track segments of the second device and the tracks of the second line, and wherein each track segment of the second device is alignable with a respective track of the second line in the first position and with a respective track of the third line in the second position such that an end of the track segment adjoins an end of the aligned track to allow a runner to cross over between the aligned track and track segment, the tracks of the first and third lines are at essentially the same level in the support direction.

In an embodiment of the system, the tracks of each line comprise at least two tracks between which a space is defined for movement of at least part of each product carrier.

This embodiment is suitable for implementing an overhead conveying system in which the product carriers, in particular the transporters, move above the processing stations of the processing apparatus, rather than the transporters moving alongside the processing stations. The lines can therefore be relatively narrow. This is of particular use in the embodiment in which the lines comprise segments that can be pre-assembled and shipped in assembled state to the site of the processing apparatus.

In a particular example of this embodiment, each line is free of parts above the space in the absence of a product carrier.

This embodiment reduces the height of the lines in the absence of a product carrier. Again, pre-assembly and shipment in standard intermodal containers is thereby facilitated. When placed on the tracks, a relatively large part of the product carrier can extend above the level of the tracks, so that the height of the processing stations is not too severely limited.

In an example of any embodiment in which the tracks of each line comprise at least two tracks between which a space is defined for movement of at least part of each product carrier, the tracks between which the space is defined are supported on cantilevers extending inwards from opposite sides of the space.

The tracks on either side of the space are supported by different cantilevers. There are thus no cross-bars that would extend across the passage of a product carrier having a relatively large part depending from the transporter into the space. On the one hand, this lowers the centre of gravity of the product carriers with respect to the tracks. On the other hand, the parts to be treated can be carried at a relatively low level and need only be lowered a short distance into each processing station, e.g. into a bath comprised in a processing station. Thus, more time is available for the actual processing steps.

In an embodiment of the system, each product carrier further comprises at least one drive for driving the product carrier along the tracks and track segments.

There is therefore no need to provide devices along the lines for propelling the product carrier. This simplifies the stationary parts of the lines and makes them relatively cheap to implement. Furthermore, these stationary parts can be relatively lightweight, which facilitates pre-assembly in segments for shipping to the site of the processing apparatus. The drive may be electromagnetic, pneumatic or hydraulic, for example, depending partly on the type of runner with which the transporters of the product carriers are provided. The interconnecting device also does not require a device for moving the product carrier onto and off the track segments of the movable support structure. This simplifies and reduces the weight of the movable support structure.

In an embodiment of the system, each product carrier comprises:
a container having an interior for accommodating a plurality of the parts to be treated; and
a frame, at least indirectly connecting the container to the transporter to allow the transporter to carry the container at a level below the at least one runners of the transporter in the support direction.

The container may in particular be configured for transporting loose parts to be treated. The container may be a basket or a barrel, stationary or movable with respect to the frame at least indirectly connecting the container to the transporter. The transporter moves at a level well above that of the processing stations of the processing apparatus. The frame positions the parts to be treated at a level closer to that of the processing stations of the processing apparatus.

In an example of this embodiment, the system is a system for conveying the plurality of parts through an apparatus for wet-chemical treatment of the parts, the frame comprises a respective frame part at at least one of opposite axial ends of the container with respect to an axis of the container, and the container is liquid-pervious between the axial ends to allow liquid to flood the interior when the container is immersed in the liquid.

Wet-chemical treatment may in particular include at least one of chemical or electrolytic metal deposition, chemical or electrolytic etching and chemical or electrochemical cleaning. Specifically contemplated examples of electrolytic metal deposition include galvanic deposition of metal onto the parts to be treated. The frame connecting the container to the transporter allows the transporter to carry the container at a level below the runner or runners of the transporter, at least when the transporter is positioned at a processing station of the processing apparatus. The tracks can therefore be above a bath containing liquid into which the container is to be immersed. The tracks need not be positioned adjacent the bath. The frame connecting the container to the transporter comprises a respective frame part at at least one of opposite axial ends of the container with respect to an axis of the container. The container is thus carried at one or both axial ends, but only at axial ends. The locations of the frame parts therefore determine the orientation of the container axis. The container is liquid-pervious between the axial ends to allow liquid to flood the interior of the container when the container is immersed in processing liquid. Because the container is carried by the frame only at one or both axial ends, the flow of liquid into and out of the container is relatively unobstructed. Where the parts are treated electrochemically, the frame parts do not appreciably disrupt the electric field.

In a particular example of this embodiment, the container axis extends in a direction transverse to the support direction and a longitudinal direction of the track segments of the interconnecting device, when the product carrier is positioned on the movable support structure of the interconnecting device.

Generally, the radial dimension of the container will be smaller than the axial dimension (with respect to the container axis). The product carrier can thus be relatively narrow in this example. The frame parts are located in front of and/or behind the container with respect to the direction in which the product carrier is arranged to move. The first and second lines of the system can therefore be relatively narrow. When electrodes are arranged at a processing station of the processing apparatus, these will be located on one or both sides of the container, with the container axis approximately aligned with the direction of movement of the product carrier. The frame parts will therefore not obstruct the electric field lines, which can extend transversely to the container axis. This results in a relatively uniform electric field. Furthermore, the container may be moved through several processing stations sharing a common bath, which stations need then not be separated by electrodes extending across the path of the container when the container is kept immersed in that bath. The container need not be lifted and lowered between processing stations. This is of particular use where there are several product carriers moving through the processing apparatus and the treatments are synchronised in the sense that fixed units of treatment time are defined.

In an example of any embodiment in which each product carrier comprises: a container having an interior for accommodating a plurality of the parts to be treated; and a frame, at least indirectly connecting the container to the transporter to allow the transporter to carry the container at a level below the at least one runners of the transporter in the support direction, the frame is inseparable from the transporter.

This is, amongst others, made possible by the feature of the interconnecting device that each track segment is alignable with a respective track of the first line in the first position and with a respective track of the second line in the second position such that an end of the track segment adjoins an end of the aligned track to allow a runner to cross over between the aligned track and track segment. The container need not be transferred from the transporter to another transporter or a conveyor, but moves with the transporter. The transporter need not move back and forth along the first and second lines. For the first or second line of the system, this embodiment also means that there is no need for any structures to receive the frame and container at each of multiple processing stations of the processing apparatus.

In a further example of any embodiment in which each product carrier comprises: a container having an interior for accommodating a plurality of the parts to be treated; and a frame, at least indirectly connecting the container to the transporter to allow the transporter to carry the container at a level below the at least one runners of the transporter in the support direction, each product carrier further comprises a mechanism for guiding movement of at least one of the container and the frame relative to the transporter in the support direction.

In other words, the container can be raised and lowered with respect to the transporter, e.g. to immerse the container into a bath in the processing apparatus. The frame prevents swaying of the container during movement. The tracks of the first and second lines can remain at one level, since the transporter need not move up and down. It is noted that an actuator for raising and/or controlled lowering of the frame and/or container may be a stationary actuator arranged to engage the product carrier only at a particular position along the tracks of the first and/or second line. Alternatively, the actuator may be comprised in the product carrier, e.g. mounted to the transporter.

In a particular example of any embodiment in which each product carrier comprises:
a container having an interior for accommodating a plurality of the parts to be treated; and a frame, at least indirectly connecting the container to the transporter to allow the transporter to carry the container at a level below the at least one runners of the transporter in the support direction, wherein each product carrier further comprises a mechanism for guiding movement of at least one of the container and the frame relative to the transporter in the support direction, the mechanism comprises at least one elongate part of the frame and at least one respective bearing for guiding the movement of the elongate part of the frame.

The frame can be relatively simple and robust, capable of withstanding aggressive processing liquids when immersed therein. Because the frame can be raised, relative to the transporter, the transporter need not move at a very high level above the processing stations of the processing apparatus. At least a section of the frame may be located next to the runners of the transporter, so that the elongate part can move through or next to the transporter. The product carrier is thus of the elevator type, as opposed to the lift-arm type. Where the transporter is supported on top of the movable support structure of the interconnecting device, in use, the movable support structure can have a relatively small height. The movable support structure need not extend very far downwards from the level of the track segments in order to accommodate the frame and the container.

In a particular example of any embodiment in which each product carrier comprises:
a container having an interior for accommodating a plurality of the parts to be treated; and a frame, at least indirectly connecting the container to the transporter to allow the transporter to carry the container at a level below the at least one runners of the transporter in the support direction, the container is a barrel journalled to the frame for rotation about the axis of the container.

This provides for better contact between the parts to be treated and processing liquid when the container is immersed in the processing liquid. The parts to be treated can be accommodated in the container as loose parts. A rack or the like for keeping them separated from each other is not required. Furthermore, the barrel can be rotated to shake off processing liquid after the container has been lifted out of the processing liquid.

In a particular version of this example, each product carrier further comprises at least one transmission mechanism, e.g. a gear train, for transmitting rotary movement from a barrel drive to the container.

The barrel drive need not be immersed in the processing liquid in this embodiment. The transmission mechanism keeps the barrel drive separated from the barrel, in particular in the support direction. The gear train is relatively easy to implement using gears made of material suitable for exposure to aggressive processing liquids. However, a transmission mechanism using a chain or belt is also conceivable.

In a particular example, the product carrier further comprises the barrel drive.

This means that the stationary parts of the first and/or second line need not comprise barrel drives at the various processing stations. These stationary parts can therefore be relatively compact and lightweight, facilitating pre-assembly prior to shipping to the site of the processing apparatus.

In an embodiment of the system, at least the first and second lines each comprise at least one respective live rail and each product carrier further comprises at least one contact shoe assembly for contacting one of the at least one live rails.

This allows the product carrier to comprise an electric drive for moving the product carrier along the first and second lines.

In an embodiment of the system, each product carrier comprises at least one drive and at least one controller for controlling operation of at least one of the at least one drives.

There may be one controller per drive or one controller arranged to control multiple drives. Alternatively, an overall controller may co-ordinate the operation of individual drive controllers. The term controller is used here to denote a control system, not necessarily a microcontroller. The controller or controllers may thus comprise a programmed computer. In this embodiment, the product carrier can operate autonomously or semi-autonomously.

In a particular example of any embodiment in which each product carrier comprises at least one drive and at least one controller for controlling operation of at least one of the at least one drives, each product carrier comprises a data storage device for storing instructions defining a series of operations effected by operating at least one of the at least one drives, and at least one of the at least one controllers is arranged to access the data storage device to obtain and give effect to the instructions.

Thus, these product carriers can be programmed to implement a particular process carried out in the processing apparatus.

In a particular example of any embodiment in which each product carrier comprises at least one drive and at least one controller for controlling operation of at least one of the at least one drives, each product carrier further comprises at least one communication interface for obtaining instructions to at least one of the at least one controllers defining operations effected by operating at least one of the at least one drives, and the system further includes at least one data processing device including at least one communication interface for transmitting the instructions to the communication interfaces of the product carriers.

Thus, a certain amount or complete central control of the product carriers may be made possible. Alternatively or additionally, the product carriers may be programmed via the communication interfaces.

According to another aspect, the apparatus according to the invention for wet-chemical processing of parts to be treated comprises at least one bath and a system according to the invention for conveying the parts to be treated through the apparatus.

In an embodiment of the apparatus, at least one of the baths is positioned with an upper end below the at least one tracks of at least one of the first and second lines in the support direction.

According to another aspect, the method according to the invention is characterised in that the step of aligning each track segment with a respective track of the second line in the second position comprises rotating the movable support structure about an axis parallel to the support direction moving the movable support structure in at least an axial direction.

Thus, the product carrier is moved from the first to the second line by pivoting the product carrier about a generally upright axis and by raising or lowering the product carrier. The parts to be treated remain on the product carrier. The product carrier can thus continue along a path extending along the first line and along the second line. The product carrier need not reverse at the position where the first and second lines are interconnected.

An embodiment of the method comprises the use of at least one of a system according to the invention and a station comprising a device according to the invention.

Likewise, the device, system and apparatus of the invention are suitable for carrying out the method according to the invention.

### Brief Description of Drawings

The invention will be explained in further detail with reference to the accompanying drawings, in which:
- Fig. 1: is a diagram showing a layout of an apparatus for wet-processing articles to be treated;
- Fig. 2: is a perspective view of a segment of the apparatus, comprising a segment of a system for conveying the articles to be treated through the apparatus;
- Fig. 3: is a side view of the system segment;
- Fig. 4: is a top view of the system segment;
- Fig. 5: is a perspective view from a first side of a product carrier comprised in the system;
- Fig. 6: is a perspective view from a second side of the product carrier;
- Fig. 7: is a schematic block diagram illustrating components for controlling the operation of the product carrier;
- Fig. 8: is a first detailed perspective view of a transporter comprised in the product carrier;
- Fig. 9: is a second detailed perspective view of part of the transporter, with certain housing parts removed;
- Fig. 10: is a detailed side view of part of the product carrier with certain housing parts removed;
- Fig. 11: is a perspective view of a device for interconnecting two lines of the system;

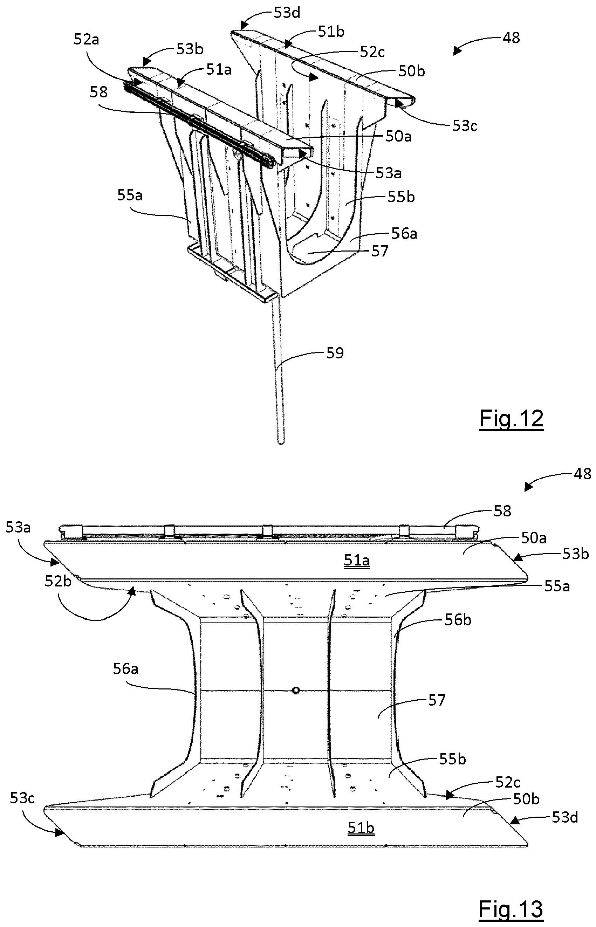

- Fig. 12: is a perspective view of a movable support structure comprised in the interconnecting device;
- Fig. 13: is a top view of the movable support structure;
- Fig. 14: is a perspective view of the movable support structure with certain parts removed to show parts of a device for supplying electric power to the transporter;
- Fig. 15: is a perspective view of part of the movable support structure showing part of a device for rotating the movable support structure;
- Fig. 16: is a perspective view of part of the interconnecting device with the movable support structure removed;
- Fig. 17: is a second perspective view of the part of the interconnecting device shown in Fig. 16;
- Fig. 18: is a detailed perspective view showing the device for rotating the movable support structure; and
- Fig. 19: is a detailed perspective view showing a support comprised in the interconnecting device, to which the movable support structure is rotatably mounted and which is guided for movement relative to a main support structure of the interconnecting device.

### Description of Embodiments

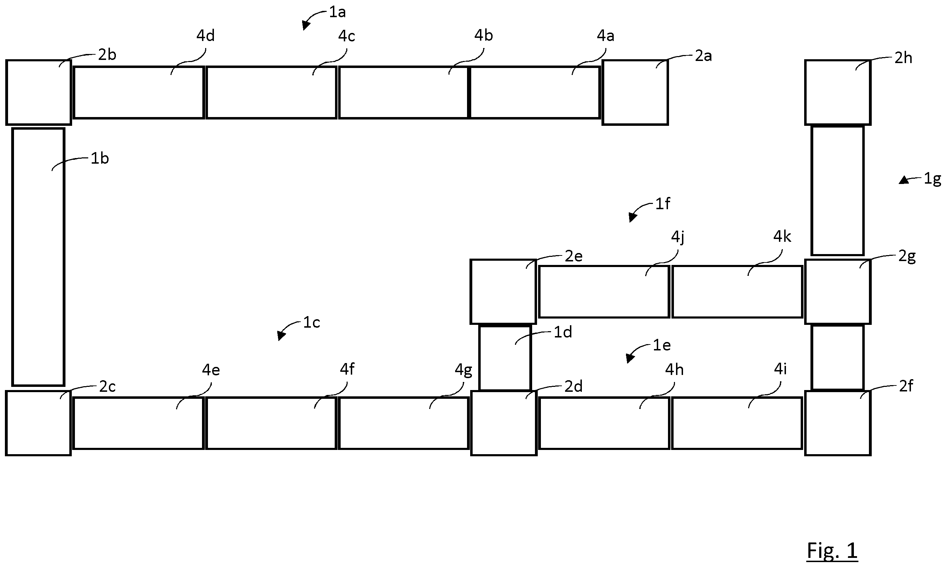

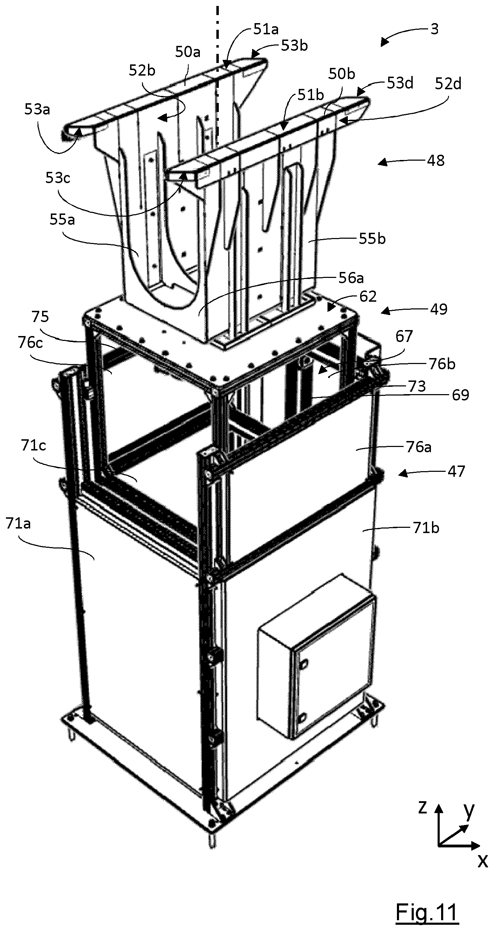

A simplified apparatus for wet-chemical treatment of loose parts (not shown) comprises first to seventh lines 1a-g (Fig. 1) and stations 2a-h that each comprise an interconnecting device 3 (Fig. 11) for interconnecting lines 1a-g. Not all of these interconnecting devices 3 need actually interconnect lines 1a-g and some interconnect more than two lines 1a-g, as shown. In particular, a first and ninth station 2a,h (Fig. 1) interconnect a first line 1a with a loading facility (not shown) and a seventh line 1g with an unloading facility (not shown), respectively. Such a station may also be inserted within a line 1a-g in some embodiments.

In the illustrated embodiment, the first and a third, fifth and sixth line 1a,c,e,f may be processing lines in which processing stations are arranged. Second, fourth and seventh lines 1b,d,g may be interconnecting lines along which no processing stations are arranged. In the illustrated embodiment, the first, third, fifth and sixth lines 1a,c,e,f are composed of standard-length apparatus segments 4a-k, whereas the other lines 1b,d,g are each comprise a segment of a length specific to that line 1b,d,g. In other embodiments, all the lines 1a-g are composed of standard-length apparatus segments 4a-k.

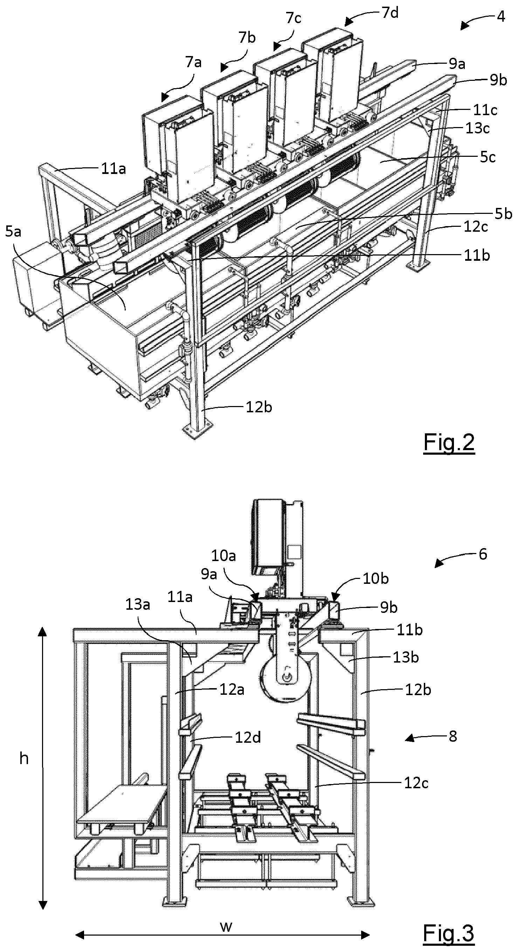

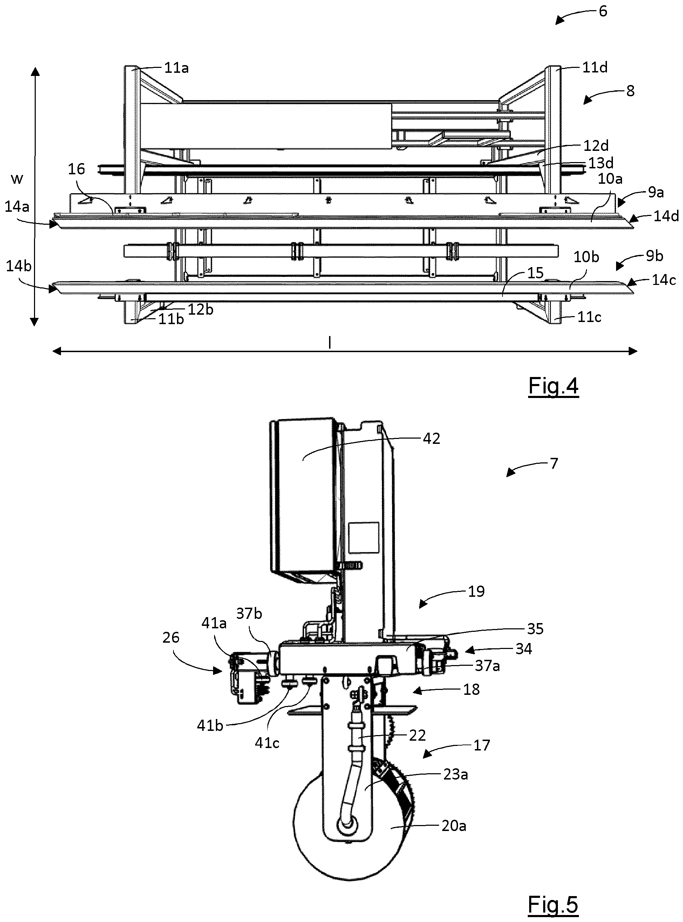

The illustrated apparatus segment 4 (Fig. 2) comprises tanks 5a-c for accommodating liquid in which the parts to be treated are immersible. The apparatus segments 4a-k each comprise a system segment 6 (Figs. 3, 4) of a conveying system for conveying parts to be treated through the processing apparatus. The conveying system further comprises at least one product carrier 7a-d (Figs. 2, 5 and 6). One or more processing stations are defined in each tank 5a-c. In a method of operating the apparatus, processing is synchronised, in that a fixed unit of processing time is defined. Each product carrier 7 remains at a processing station for one unit of processing time or a multiple of the unit of processing time. An effect of this synchronised method of processing is that there is less risk of collision between the product carriers 7a-d. If the tank 5 is large enough, a product carrier 7 may stop at a first position above the tank 5 for a first unit of time and then move to a second position above the same tank 5, where the product carrier 7 remains for a second unit of time. The parts to be treated may stay immersed in the liquid during these steps, so that treatment can essentially continue.

Each system segment 6 comprises a stationary system frame 8 (Figs. 3 and 4) that forms a support structure on which a pair of elongate bars 9a,b are mounted. The bars 9a,b define tracks 10a,b along which the product carriers 7a-d are arranged to move. The product carriers 7a-d are supported in a vertically oriented support direction z by the tracks 10a,b. In the illustrated embodiment, the tracks 10a,b lie in a plane transverse to the support direction z, i.e. they are at one level.

The bars 9a,b and thus the tracks 10a,b form a pair between which a space is defined in which a lower part of a product carrier 7 can move (cf. Fig. 3). The system segment 6 is free of parts above the space in the absence of the product carrier 7. Thus, the product carrier 7 can extend above the level of the system segment 6 and move without obstruction.

To provide the space, the system frame 8 comprises cantilevers 11a-d on which the bars 9a,b and thus the tracks 10a,b, are supported. The system frame 8 does not define a gantry. The cantilevers 11a-d are mounted to upright posts 12a-d and reinforced by struts 13a-d.

The system frame 8 has a length /*,* a width *w* and a height *h* allowing the system frame 8 to be pre-assembled and then shipped to the site of the processing apparatus in a standard-size intermodal container.

Longitudinal end faces 14a-d of the bars 9a-d and thus longitudinal edges of the tracks 10a,b are at an angle to their longitudinal axes. The angle may be between 20° and 70°, e.g. between 40° and 50°, for example.

The conveying system is comprised in the processing apparatus in such a configuration that the tracks 10a,b of the first line 1a, third line 1c, fifth line 1e and sixth line If are positioned at one level, as shown in Fig. 3. These tracks 10a,b also extend in parallel. They are positioned above the upper ends of the tanks 5a-c. The tracks of the second line 1b, fourth line 1d, and seventh line 1g are at a different level in the support direction *z.* These tracks are at right angles to those of the first line 1a, third line 1c, fifth line 1e and sixth line If. In the illustrated embodiment, the tracks of the second line 1b, fourth line 1d, and seventh line 1g are at a higher level, such that an operative can move under the second line 1b, fourth line 1d, and seventh line 1g without risk of being hit by a product carrier 7 moving along that line. In another embodiment, the tracks of the second line 1b, fourth line 1d, and seventh line 1g are at a lower level than those of the first line 1a, third line 1c, fifth line 1e and sixth line If, so that it is relatively easy to provide a walkway crossing the second line 1b, fourth line 1d, and seventh line 1g.

The system frame 8 supports a high-voltage live rail 15 and a low-voltage live rail 16. A power supply system (not shown in detail) maintains the low-voltage live rail at an Extra Low Voltage, meaning a voltage below 50 V, e.g. 24 V. The high-voltage live rail 15 is arranged to supply electric power at a higher voltage and to support currents necessary for electrolytic processing, in particular electroplating. This voltage will be between 300 V and 1000 V, e.g. between 400 V and 600 V. The high-voltage live rail 15 is only required for those apparatus segments 4a-k comprising processing stations for electrolytic processing of parts to be treated.

The product carrier 7 (Figs. 5, 6 and 8-10) comprises a barrel 17, a barrel holding frame 18 and a transporter 19.

The barrel 17 forms a container of which the interior is arranged to accommodate the parts to be treated. The barrel 17 comprises opposing barrel end walls 20a,b, located at opposite axial ends with respect to a barrel axis (not shown) corresponding to a body axis of the barrel 17. The barrel 17 further comprises a side wall 21. The barrel side wall 21 may be cylindrical. In the illustrated embodiment, the barrel side wall 21 comprises planar panels. One or more of the panels can be removed to insert and remove the parts to be treated.

The panels are perforated, so that they are pervious to liquid. When the barrel 17 is immersed in liquid, the liquid can flood the interior of the barrel 17 through the perforations. In the illustrated embodiment, the barrel end walls 20a,b are impervious to liquid, but this is not essential.

An electrical conductor 22 (Fig. 5) is connected to a dangler electrode (not shown) in an interior of the barrel 17.

The barrel axis is oriented essentially in parallel to a direction of movement of the product carrier 7 along the tracks 10a,b. In the illustrated embodiment, the diameter of the barrel 17 is smaller than the axial dimension of the barrel 17. Thus, the orientation of the barrel allows the space between the tracks 10a,b to be relatively narrow.

The barrel 17 is held by the barrel holding frame 18, which connects the barrel 17 to the transporter 19. The barrel holding frame 18 comprises an, in use, lower frame section and an upper frame section. The lower frame section comprises two frame parts 23a,b, located at opposite axial ends of the barrel 17. The barrel 17 is rotatably journalled to the barrel holding frame 18 in between the frame parts 23a,b. The parts to be treated (not shown) are loosely arranged in the interior of the barrel 17. Rotating the barrel 17 during treatment of the parts allows for a more uniform treatment of the parts, because tumbling parts to be treated exposes different areas of these parts to the processing liquid.

The barrel 17, although movable with respect to the barrel holding frame 18, is inseparable from the barrel holding frame 18. In turn, the barrel holding frame 18, although movable with respect to the transporter 19, is inseparable from the transporter 19. The product carrier 7 thus forms a unit. The product carrier 7 is arranged to remain with the parts to be treated throughout the treatment process. The barrel 17 need not be transferred to another product carrier 7, conveyor or stationary devices at processing stations. The transporters 19 all move in one direction along the lines 1a-g.

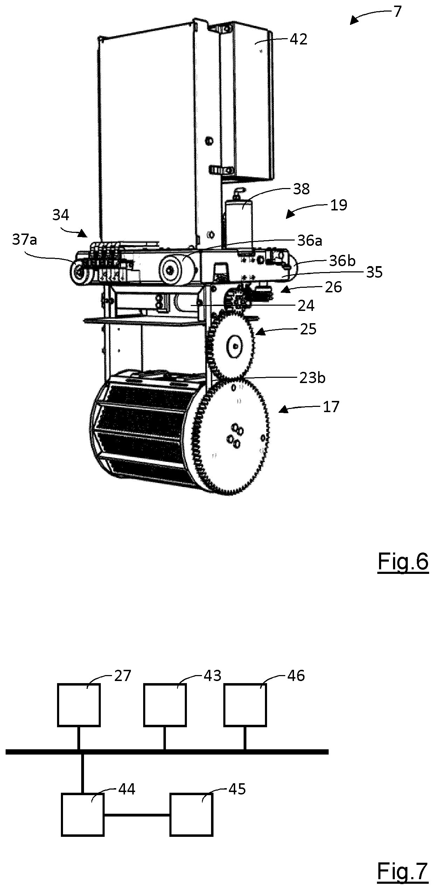

In the illustrated embodiment, an electrical motor forming a barrel drive 24 (Fig. 6) is mounted to the barrel holding frame 18. The barrel drive 24 is connected to the barrel 17 via a gear train 25. The gear train 25 effects a separation between the barrel drive 24 and the barrel 17, so that the barrel drive 24 can be maintained at a distance to processing liquid in the tanks 5a-c. The gear train 25 comprises gear wheels, which may be made of plastic or ceramic material, for example. Power is supplied to the barrel drive 24 from the low-voltage live rail 16 via a first contact shoe assembly 26 (Figs. 5, 6 and 8), mounted to the transporter 19, and through one or more electrical cables (not shown in detail) interconnecting the transporter 19 and the barrel holding frame 18.

A controller 27 (Fig. 7) controls the operation of the barrel drive 24. The operation of the barrel drive 24 is controllable independently of other drives that the product carrier 7 comprises. In particular, the barrel 17 may be rotated whilst immersed in processing liquid, but also whilst suspended above one of the tanks 5a-c, in order to shake off processing liquid. The movement may be reciprocating movement. The term controller is used herein in a functional sense: such a controller will generally comprise at least one microprocessor and memory.

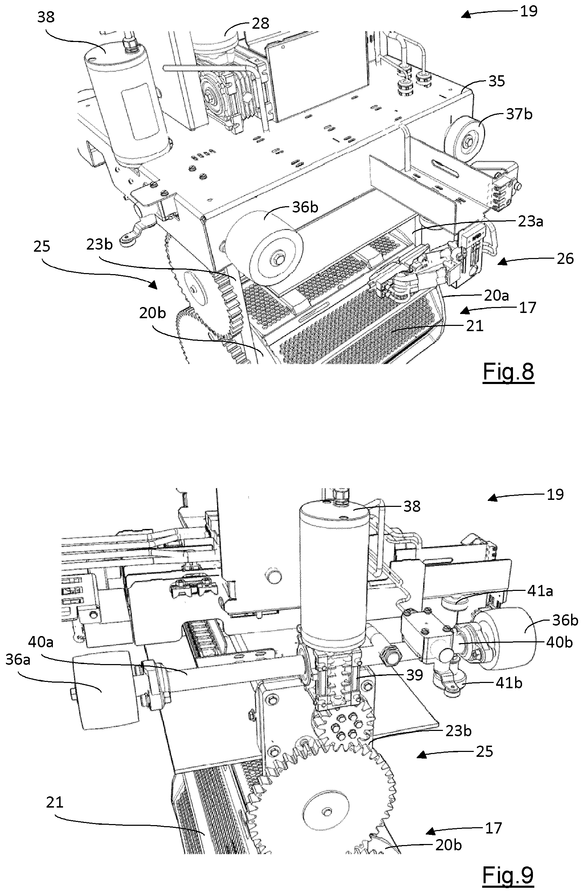

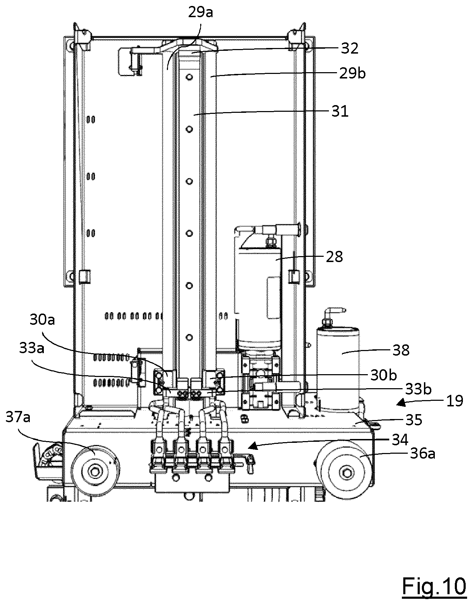

Since the tracks 10a,b remain at one single level in the support direction *z,* the barrel 17 is to be raised and lowered with respect to the transporter 19 to allow the barrel 17 to be immersed in processing liquid. The product carrier 7 comprises a lifting drive 28 (Figs. 8 and 10) for driving movement of the barrel 17 relative to the transporter 19 in the support direction *z.* In the illustrated embodiment, the barrel holding frame 18 is arranged to move with the barrel 17 in the third direction *z* and the opposite direction. In other embodiments, the barrel holding frame 18 may remain partly or completely stationary with respect to the transporter 19, with the barrel 17 moving with respect to the barrel holding frame 18. However, this alternative embodiment is more complicated. The illustrated embodiment also allows the product carrier 7 to clear obstacles such as walls of the tanks 5a-c more easily. Because the upper frame section is relatively narrow, the upper frame section can pass through the transporter 19 relatively easily. The lower frame section remains below the transporter 19 at all times.

In the illustrated embodiment, the upper frame section comprises a pair of guide shafts 29a,b (Fig. 10) that pass through linear bearings 30a,b fixedly mounted to the transporter 19. Multiple aligned linear bearings 30a,b are provided for each guide shaft 29a,b in the illustrated embodiment, although only one is shown.

A current-carrying bar 31 (Fig. 10) extends between the guide shafts 29a,b. The current-carrying bar 31 is bent at an end distal to the barrel 17 to define a contact point 32. The current-carrying bar 31 is connected to the dangler electrode at an end of the current-carrying bar 31 proximal to the barrel 17. When the barrel-holding frame 18 is in a position at an end of a range of movement at which the barrel 17 is furthest apart from the transporter 19, the contact point 32 makes electrical contact with electrical contacts 33a,b mounted on the transporter 19 to supply current to the dangler electrode. In other positions of the barrel-holding frame 18 the power supply to the dangler electrode is consequently interrupted. The current-carrying bar 31 may be a solid structure made of electrically conductive material, e.g. copper or a copper alloy. Alternatively, the current-carrying bar 31 may comprise a shielding in which a conductor is provided, the shielding leaving only the contact point 32 exposed. Power is supplied to the current-carrying bar 31 via a second contact shoe assembly 34 arranged to contact the high-voltage live rail 15.

The transporter 19 comprises a base 35 on which are mounted the various transporter components referred to above.

A pair of driven wheels 36a,b and a pair of further supporting wheels 37a,b are rotatably mounted to the transporter base 35. These four wheels 36a,b,37a,b are arranged to support the transporter 19, and thus the product carrier 7, on the tracks 10a,b. A first set of two wheels 36a,37a is supported on a first track 10b and a second set of two wheels 36b,37b is supported on a second track 10a. The transporter 19 extends between the first set and the second set, which sets are spaced apart in a direction transverse to the longitudinal direction. The upper frame section of the barrel holding frame 18 is movable in the support direction *z* in between the first and the second sets of supporting wheels 36a,b,37a,b

A transporter drive 38 comprises an electric motor coupled to a transmission 39 for driving drive axles 40a,b on which the driven wheels 36a,b are mounted. The controller 27 also controls the operation of the transporter drive 38.

Guide wheels 41a-c (Figs. 5 and 9) are arranged to rotate about axes aligned or approximately aligned with the support direction *z.* These guide wheels 41a-c are arranged to contact respective opposite lateral surfaces of the bars 9a,b when the supporting wheels 36a,b,37a,b are positioned on the tracks 10a,b. In this manner, the product carrier 7 is positioned more accurately.

Thus, the wheels 36a,b,37a,b form runners arranged to support the product carrier 7 on at least one track 10a,b. These support and guidance functions may be combined in alternative embodiments, e.g. in an embodiment employing sledges arranged to slide along a track instead of wheels.

The controller 27 and other electronic and electrical parts may be housed in a cabinet 42 (Figs. 5 and 6) situated above a level of the transporter base 35, for example.

The controller 27 is able to access a non-volatile data storage device 43 (Fig. 7) to retrieve instructions defining at least one of a route and a series of operations in the apparatus for wet-chemical processing of parts to be treated. These instructions may in particular identify the processing stations at which the product carrier 7 is to stop and immerse the barrel 17 in processing liquid. They may include a definition of the length of time for which the barrel 17 is to remain immersed. In an embodiment in which the treatment is synchronised, this time period may be defined in terms of a multiple of the unit of time used to synchronise the operation of the multiple product carriers 7a-d. The instructions may further define whether the barrel 17 is to be rotated when immersed and/or when in transit. Where multiple processing stations are defined for one tank 5a-c, the instructions may cause the product carrier 7 to move from a position associated with a first processing station to a position associated with a second, different processing station whilst keeping the barrel 17 immersed in the processing liquid contained in the tank 5a-c.

A sensor interface 44 to one or more sensor devices 45 is provided to enable the controller 27 to control operations or parts of operations autonomously, i.e. independently of a central control system of the apparatus for wet-chemical processing. Such sensors may include, for example, photoelectric sensors for detecting light emitted or reflected by beacons (not shown) positioned along the tracks 10a,b, magnetic sensors for detecting magnetic beacons (not shown) positioned along the tracks 10a,b, feelers deflected by beacons positioned along the tracks 10a,b, one or more motion sensors (accelerometers) or rotation sensors for implementing dead reckoning, etc.

In the illustrated embodiment, data can also be obtained through a network communication interface 46. This can include the data stored in the data storage device 43, thus allowing the product carrier 7 to be reprogrammed with a different series of operations and/or a different route. The data can also include control commands directly affecting the operation of one or more of the drives 24,28,38. Thus, it is also or alternatively possible to control the operation of the multiple product carriers 7a-d centrally. Furthermore, the product carrier 7 can communicate error messages to a central control system, for example. The same or a further network communication interface 46 can also or alternatively be used to enable the product carriers 7a-d to communicate amongst each other. This can be of use in avoiding collisions, for example. The network communication interface 46 may in particular be a wireless network communication interface 46. The wireless network communication interface 46 may be in accordance with one or more of the IEEE 802.11 standards, for example.

Each interconnecting device 3 comprises a main support structure 47, a movable support structure 48 and a movable support 49. The movable support structure 48 is indirectly supported by the main support structure 47, namely via the support 49.

The movable support structure 48 comprises a pair of elongate track segments 50a,b for supporting the wheels 36a,b,37a,b of the transporter 19 in the support direction *z.* Each of the track segments 50a,b comprises an (upper) support surface 51a,b facing in the support direction *z.* In the illustrated embodiment, the support surfaces 51a,b each have a normal parallel to the support direction *z.* They may alternatively be inclined slightly such as to partly face in a lateral direction with respect to longitudinal axes of the track segments 50a,b.

In the illustrated embodiment, the track segments 50a,b also present lateral guide surfaces 52a-d for contacting the guide wheels 41a-c of the transporter 19a,b.

Longitudinal edges 53a-d of the support surfaces 51a,b of the track segments 50a,b are at an angle to the longitudinal direction. The angle may be between 20° and 70°, e.g. between 40° and 50°, for example.

The track segments 50a,b are spaced apart in lateral direction. The spacing corresponds to that of the tracks 10a,b of the system segment 6 and that of the tracks of the lines not composed of standard-size segments. The angle of the track segment edges 53a,b is also complementary to the angle of the longitudinal edges of the tracks 10a,b, in the sense that the two angles add up to at least approximately 90°. Thus, in a first position of the movable support structure 48, the track segments 50a,b are each aligned with a respective track 10a,b of a line 1 interconnected by the interconnecting device 3 to another line 1, such that the wheels 36a,b,37a,b of the transporter 19 can move across between the tracks 10a,b and track segments 50a,b. In a second position of the movable support structure 48, the track segments 50a,b are each aligned with a respective track 10a,b of that other line 1. The tracks 10a,b of the interconnected lines 1 are at different levels in the support direction and their longitudinal axes are at an angle to each other, e.g. at right angles as shown (Fig. 1). Thus, the movement between the first position and the second position comprises both a rotation about an axis 54 parallel to the support direction *z* and a translation in the support direction *z,* i.e. in axial direction.

The movable support structure 48 defines a space for receiving the lower section of a product carrier 7, specifically the barrel 17 and at least the lower frame section of the barrel holding frame 18. The space is open at the top between the track segments 50a,b and bounded by side walls 55a,b and end walls 56a,b, as well as a bottom wall 57. Lower sections of the end walls 56a,b, the side walls 55a,b and the bottom wall 57 define a basin for collecting any liquid that may drip from the barrel 17 when the product carrier 7 is present on the movable support structure 48.

A live rail 58 is mounted to the movable support structure 48 for supplying power to the first contact shoe assembly 26 of the transporter 19. Thus, the transporter 19 can move onto and off the movable support structure 48 autonomously. Power is supplied to the live rail 58 via a cable extending through a cable duct 59 at least approximately aligned with the axis of rotation 54.

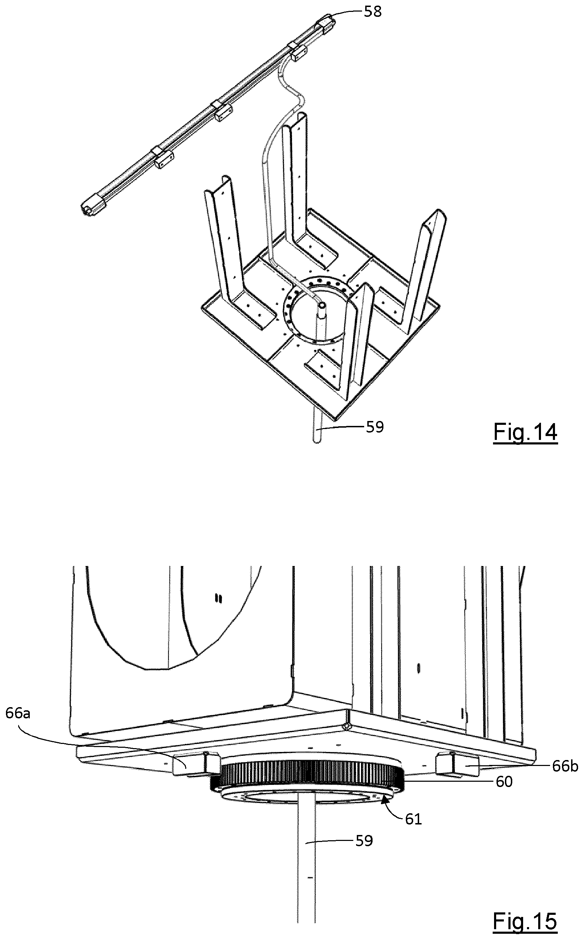

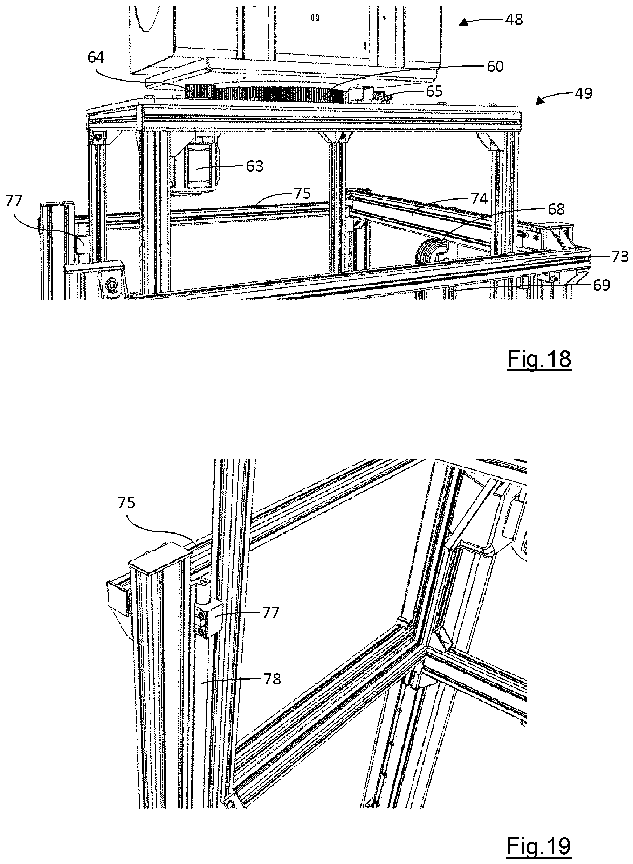

A toothed wheel 60 (Figs. 15 and 18) is mounted to the underside of the movable support structure 48. An axis of rotation of the toothed wheel 60 is at least approximately aligned with the axis of rotation 54. A bearing surface 61 (Fig. 15) of the toothed wheel 60 is supported on a top surface 62 of the support 49, such that the movable support structure 48 in effect forms a turntable. In the illustrated embodiment, the top surface 62 is just a plane surface and the bearing surface 61 is a dedicated component. The reverse constellation is possible in an alternative embodiment. In yet another embodiment, the toothed wheel 60 may be supported for rotation by a roller or ball bearing.

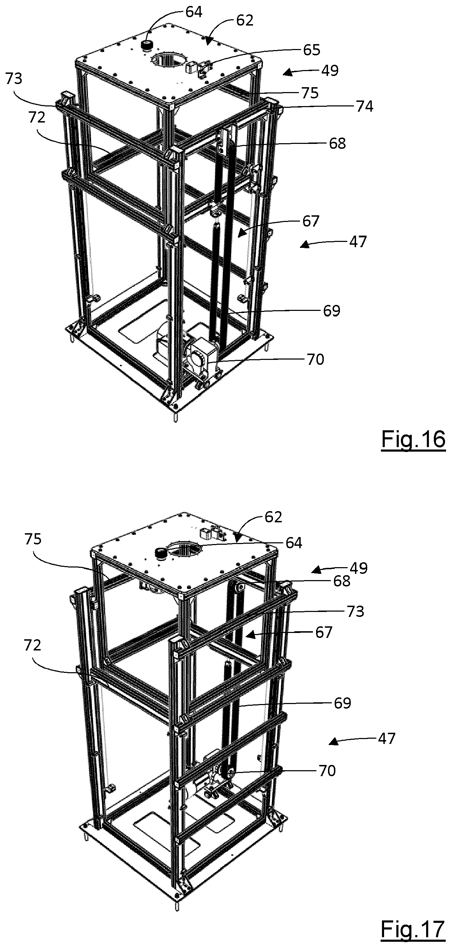

The support 49 is provided with a support motor 63 (Fig. 18), in this embodiment an electric motor, mounted thereto. The support motor 63 coupled to a pinion 64, which in turn meshes with the toothed wheel 60. Thus, the rotation of the movable support structure 48 about the axis 54 of rotation is driven. In other embodiments, a hydraulic or pneumatic motor may be used. Likewise, a toothed belt or the like may be used instead of the pinion 64. A sensor mount 65 (Figs. 16 and 18) is provided to allow one or more sensors (not shown) to detect the rotary position of the movable support structure 48 relative to the support 49, and thus to the main support structure 47. Signalling devices 66a,b (Fig. 15) are mounted to the underside of the movable support structure 48 to provide signals detectable by the sensors supported by the sensor mount 65. The signalling devices 66a,b may, for example, interrupt or reflect light beams or they may serve as mounts for magnets detectable by magnetic sensors. Other alternatives are possible.

In the illustrated embodiment, a hoist 67 is provided for effecting the movement of the movable support structure 48 in the support direction *z* by raising and lowering the support 49. The hoist 67 comprises a lift wheel 68, a hoist medium in the form of a hoist belt 69 and a hoist motor 70. In the illustrated embodiment, the hoist motor 70 is an electric motor. In alternative embodiments, the hoist motor 70 may be a pneumatic or hydraulic motor. In the illustrated embodiment, the hoist motor 70 is mounted to the main support structure 47. In alternative embodiments, the hoist motor 70 is just anchored to the ground or otherwise held in fixed position relative to the main support structure 47.

In the illustrated embodiment, the main support structure 47 comprises a frame to which panels 71a-c are mounted. An upper edge of the frame and panels is not at the same level in the support direction *z* on all sides. Rather, seen looking down on the main support structure 47 in a direction counter to the support direction *z,* an upper edge of the main support structure 47 on an opposite side to the side on which the lift wheel 68 is mounted is at a lower level with respect to the support direction *z.* This lower edge is formed by a first cross-bar 72 in the illustrated embodiment. Second, third and fourth cross-bars 73-75 are at a higher level with respect to the support direction. Additional panels 76a-c extend to the second, third and fourth cross-bars 73-75 on those three sides of the main support structure 47 that extend to a higher level in the support direction *z.*

Thus, the product carrier 7 can enter a space bounded by the additional panels 76a-c on three sides by moving across over the first cross-bar 72 onto the track segments 50a,b.

The lift wheel 68 is at a higher level with respect to the support direction *z* than the first cross-bar 72. The lifting medium, in this example the hoist belt 69, is attached to the support 49 at a level below an upper end of the support 49 with respect to the support direction *z.* In the illustrated embodiment, the support 49 comprises a frame and the upper end of the support is formed by the top surface 62. The hoist belt 69 is connected to a lower end of the frame of the support 49. In this way, the movable support structure 48 can be raised to a level in the support direction *z* in which the movable support structure 48 is above the level of the second, third and fourth cross-bars 73-75.

The movement of the support 49 is guided by bearings 77 (Figs. 18 and 19) travelling on interconnecting device guide shafts 78, which may be provided on all four corners of the frame of the support 49, for example.

Thus, the support 49 is guided for axial movement and effects the axial component of the movement of the movable support structure 48. The movable support structure 48 is rotatably mounted to the support 49 to allow for the rotary component of the movement between the first and second positions.

The invention is not limited to the embodiments described above, which may be varied within the scope of the accompanying claims. For example, instead of a single support 49, there may be multiple supports that together support the movable support structure for rotation and are moved by respective hoists in a synchronised manner.

### List of reference numerals

- 1a-g: - Lines
- 2a-h: - Stations
- 3: - Interconnecting device
- 4a-k: - Apparatus segments
- 5a-c: - Tanks
- 6: - System segment
- 7: - Product carrier
- 8: - System frame
- 9a,b: - Bars
- 10a,b: - Tracks
- 11a-d: - Cantilever
- 12a-d: - Upright posts
- 13a-d: - Struts
- 14a-d: - Bar end faces
- 15: - High-voltage live rail
- 16: - Low-voltage live rail
- 17: - Barrel
- 18: - Barrel holding frame
- 19: - Transporter
- 20a,b: - Barrel end walls
- 21: - Barrel side wall
- 22: - Electrical conductor
- 23a,b: - Frame parts
- 24: - Barrel drive
- 25: - Gear train
- 26: - First contact shoe assembly
- 27: - Barrel drive controller
- 28: - Lifting drive
- 29a,b: - Guide shafts
- 30a,b: - Linear bearings
- 31: - Current-carrying bar
- 32: - Bar contact point
- 33a,b: - Electrical contacts
- 34: - Second contact shoe assembly
- 35: - Transporter base
- 36a,b: - Driven wheels
- 37: - Further supporting wheels
- 38: - Transporter drive
- 39: - Transmission
- 40a,b: - Drive axle
- 41a-c: - Guide wheels
- 42: - Cabinet
- 43: - Data storage device
- 44: - Sensor interface
- 45: - Sensor device
- 46: - Network communication interface
- 47: - Main support structure
- 48: - Movable support structure
- 49: - Support
- 50a,b: - Track segments
- 51a,b: - Support surface
- 52a-d: - Lateral guide surfaces
- 53a-d: - Track segment edges
- 54: - Axis of rotation
- 55a,b: - Side walls
- 56a,b: - End walls
- 57: - Bottom wall
- 58: - Live rail
- 59: - Cable duct
- 60: - Toothed wheel
- 61: - Bearing surface
- 62: - Top surface
- 63: - Support motor
- 64: - Pinion
- 65: - Sensor mount
- 66a,b: - Signalling devices
- 67: - Hoist
- 68: - Lift wheel
- 69: - Hoist belt
- 70: - Hoist motor
- 71a-c: - Main support structure panels
- 72: - First cross-bar
- 73: - Second cross-bar
- 74: - Third cross-bar
- 75: - Fourth cross-bar
- 76a-c: - Panels
- 77: - Support bearing
- 78: - Guide shaft on interconnecting device

## Claims

1. Device for interconnecting a first line (1a) and a second line (1b) of a system for conveying parts to be treated through a processing apparatus by means of at least one product carrier (7) comprising a transporter (19) comprising at least one runner (36,37) supported on at least one track (10a,b), the device comprising:
a main support structure (47); and
a movable support structure (48), at least indirectly supported by and movable relative to the main support structure (47) between at least a first position and a second position,
wherein the movable support structure (48) comprises at least one track segment (50a,b) for supporting at least one runner (36,37) of a transporter (19) in a support direction (z), and
wherein each track segment (50a,b) is alignable with a respective track (10a,b) of the first line (1a) in the first position and with a respective track (10a,b) of the second line (1b) in the second position such that an end of the track segment (50a,b) adjoins an end of the aligned track (10a,b) to allow a runner (36,37) to cross over between the aligned track (10a,b) and track segment (50a,b), **characterised in that**
the movement between the first position and the second position comprises a rotation about an axis (54) parallel to the support direction (z) and a translation with at least a component in axial direction.

2. Device according to claim 1,
wherein the at least one track segments (50a,b) comprise at least two track segments (50a,b).

3. Device according to claim 2,
wherein the track segments (50a,b) are spaced apart in lateral direction,
wherein the movable support structure (48) defines a space for receiving at least part of a product carrier (7), which space is open at a top between the spaced-apart track segments (50a,b) and at opposite ends in longitudinal direction.

4. Device according to any one of the preceding claims,
comprising a device (58) for supplying electric power to a transporter (19), when present on the track segments (50a,b).

5. Device according to any one of the preceding claims,
further comprising at least one support (49), guided for movement in the axial direction relative to the main support structure (47),
wherein the movable support structure (48) is rotatably mounted to the at least one support (49) for rotation about the axis (54).

6. Device according to claim 5,
wherein the main support structure (47) is provided with at least one hoist (67) for driving movement in the axial direction of at least one of the at least one supports (49) and the movable support structure (48) mounted thereto.

7. Device according to claim 6,
wherein each hoist (67) comprises a respective lift wheel (68), wherein the or each lift wheel (68) is mounted to the main support structure (47), and
wherein an upper edge of the main support structure (47) on at least one side of the main support structure (47) other than any side on which at least one of the at least one lift wheels (68) is mounted is at a lower level with respect to the support direction (*z*) than the lift wheel(s) (68).

8. System for conveying parts to be treated through at least one processing apparatus, which system comprises at least one device (3) according to any one of the preceding claims, the first line (1a), the second line (1b) and at least one product carrier (7), each product carrier (7) comprising a transporter (19) comprising at least one runner (36,37) for supporting the transporter (19) for movement along the tracks (10a,b) of the first line (1a), the tracks (10a,b) of the second line (1b) and the track segments (50a,b) of the device (3).

9. System according to claim 8,
wherein the at least one tracks (10a,b) of the first line (1a) are positioned at a different level in the support direction (z) than the at least one tracks (10a,b) of the second line (1b).

10. System according to claim 8 or 9,
wherein the tracks (10a,b) of each line (1) comprise at least two tracks (10a,b) between which a space is defined for movement of at least part of each product carrier (7).

11. System according to claim 10,
wherein each line (1) is free of parts above the space in the absence of a product carrier (7).

12. System according to claim 10 or 11,
wherein the tracks (10a,b) between which the space is defined are supported on cantilevers (11a-d) extending inwards from opposite sides of the space.

13. Apparatus for wet-chemical processing of parts to be treated, comprising at least one bath (5a-c) and a system according to any one of claims 8-12 for conveying the parts to be treated through the apparatus.

14. Method of conveying parts to be treated through at least one processing apparatus by means of at least one product carrier (7) comprising a transporter (19), the transporter (19) comprising at least one runner (36,37) supportable on a track (10a,b), which method comprises:
moving the product carrier (7) along a first line (1a) comprising at least one track (10a,b) supporting at least one of the runners (36,37) of the product carrier's transporter (19) for movement along the track (10a,b); and
moving the product carrier (7) along a second line (1b) comprising at least one track supporting at least one of the runners (36,37) of the product carrier's transporter (19) for movement along the track (10a,b),
wherein the product carrier (7) is moved from the first line (1a) to the second line (1b) by means of a station (2) interconnecting the first line (1a) and the second line (1b), which station (2) comprises:
a main support structure (47); and
a movable support structure (48), at least indirectly supported by and movable relative to the main support structure (47) between at least a first position and a second position,
wherein the movable support structure (48) comprises at least one track segment (50a,b) for supporting at least one runner (36,37) of a transporter (19) in a support direction (*z*),
wherein moving the product carrier (7) from the first line (1a) to the second line (1b) by means of the station comprises:
aligning each track segment (50a,b) with a respective track (10a,b) of the first line (1a) in the first position such that an end of the track segment (50a,b) adjoins an end of the aligned track (10a,b);
causing the product carrier (7) to move from the first line (1a) onto the movable support structure (48), wherein the runners (36,37) of the transporter (19) cross over from the track(s) (10a,b) of the first line (1a) to the track segment(s) (50a,b);
aligning each track segment (50a,b) with a respective track (10a,b) of the second line (1b) in the second position such that an end of the track segment (50a,b) adjoins an end of the aligned track (10a,b); and
causing the product carrier (7) to move from the movable support structure (48) onto the second line (1b), wherein the runners (36,37) of the transporter (19) cross over from the track segment(s) (50a,b) to the track(s) (10a,b) of the second line (1b),
**characterised in that**
the step of aligning each track segment (50a,b) with a respective track (10a,b) of the second line (1b) in the second position comprises rotating the movable support structure (48) about an axis (54) parallel to the support direction (*z*) moving the movable support structure (48) in at least an axial direction.

15. Method according to claim 14, comprising the use of at least one of a system according to any one of claims 8-12 and a station (2a-h) comprising a device (3) according to any one of claims 1-7.
